# EUROPÄISCHE PATENTSCHRIFT

(11) **EP 2 190 561 B1**
(45) Veröffentlichungstag und Bekanntmachung des Hinweises auf die Patenterteilung: **09.02.2011**
(21) Anmeldenummer: 08801110.1
(22) Anmeldetag: 24.07.2008
(51) Int. Cl.: B01D 65/00, B01D 35/30, B01D 63/00, B01D 61/08, B01D 61/02

(54) **FILTERMODUL UND DESSEN ANEINANDERREIHUNG ZU EINEM FILTERSYSTEM**
FILTER MODULE AND THE STRINGING THEREOF TO FORM A FILTER SYSTEM
MODULE DE FILTRE ET EMPILEMENT DE CES MODULES EN UN SYSTÈME DE FILTRE

(30) Priorität: 20.09.2007 DE 102007044922
(43) Veröffentlichungstag der Anmeldung: 02.06.2010
(73) Patentinhaber: Völker, Manfred, 63825 Blankenbach (DE)
(72) Erfinder: Völker, Manfred, 63825 Blankenbach (DE)
(74) Vertreter: Flosdorff, Jürgen
(86) Internationale Anmeldenummer: PCT/DE2008/001272
(87) Internationale Veröffentlichungsnummer: WO 2009/036717

(56) Entgegenhaltungen:
- EP-A- 1 219 342
- WO-A-91/04783
- WO-A-2006/081542
- DE-U1- 9 422 466
- JP-A- 63 163 002
- US-A- 4 476 015
- US-A- 5 354 464
- US-A- 5 389 260
- US-A- 5 401 399
- US-A1- 2003 168 394
- US-A1- 2005 045 552

## Beschreibung

Die Erfindung betrifft ein Filtermodul und dessen Aneinanderreihung zu einem Filtersystem. Konzipiert und entwickelt wurde das System als Anwendung im Bereich der Wasseraufbereitung, speziell als Bestandteil einer Umkehrosmoseanlage. Es ist jedoch leicht auf andere Anwendungen z.B. Gasfiltration zu übertragen.

Ein wesentlicher Aspekt der Erfindung ist, dass dieses Filtermodul, bestehend aus einem Filter - auch Membrane genannt -, einem Druckrohr und einer Funktions- / Anschlusseinheit als Schnellwechselfilter ausgebildet ist und eine totraumfreie Wasserführung beinhaltet. Die besondere Ausgestaltung des Filtermoduls sieht eine Verschlusstechnik zum einseitigen Anschluss an eine Funktions- / Anschlusseinheit vor. Ein weiteres Merkmal ist die Aneinanderreihung mehrere Filtermodule zu einem Filtersystem. Von besonderer Bedeutung ist dabei, dass die zu- und abführenden Anschlüssen an das Filtermodul immer einseitig, d.h. an der Funktions- / Anschlusseinheit erfolgen.

Umkehrosmoseanlagen dienen insbesondere zur Gewinnung von reinem, keimfreiem Wassers aus Leitungswasser, z.B. für medizinische, pharmazeutische und lebensmitteltechnische Anwendungen.

Ihr Funktionsprinzip besteht bekanntlich darin, dass das aufzubereitende Wasser in einem Filtermodul unter Druck an der Oberfläche einer semipermeablen Membran entlang geführt wird, wobei ein Teil des Wassers, das so genannte Permeat, durch die Membran tritt und auf der anderen Seite der Membran als Reinstwasser gesammelt und der Verbrauchsstelle zugeführt wird.

Der nicht durch die Membran tretende, mit zurückgehaltenen Stoffen angereicherte Teil des Rohwassers, das so genannte Konzentrat, fließt am Ende der Strömungsstrecke des Primärraumes aus dem Membranmodul aus.

Das so gewonnene Reinstwasser ist im Idealfalle aufgrund der Rückhalteeigenschaften der Membran keimfrei und frei von organischen Zerfallsprodukten. In der Realität trifft dies jedoch nicht ohne weiteres zu. Ohne besondere Gegenmaßnahmen kann es zu einer Besiedlung des Permeatsystems mit Mikroorganismen kommen. Es bildet sich ein so genannter Biofilm auf den Innenflächen des flüssigkeitsführenden Systems. Dieser Biofilm wird auch Fouling genannt.

Fouling beschreibt den Verlust an Permeatleistung durch Anlagerung von Sekundärschichten auf der Membranoberfläche. Dies kann organisches Material sein, kolloidale Stoffe oder anorganische Salze, die bei der Aufkonzentrierung die Ausfällungsgrenzen überschreiten.

Es gibt bis heute noch kein allgemein gültiges Rezept, um Fouling zu verhindern. "Low Fouling Membranen" und verbesserte Vorbehandlung sowie bessere Membranreinigungen sind nur unzureichende technischen Möglichkeiten, um Fouling zu kontrollieren.

In der Industrie sind zum Beispiel temperaturbeständige Polymermembranen für Umkehrosmosen erhältlich, die bei 90 °C mit Wasser desinfiziert werden. Diese Maßnahme dient zunächst nur der Keimreduzierung, ist jedoch zum Ablösen des Biofilms wenig hilfreich.

Eine andere Möglichkeit ist, an Umkehrosmoseanlagen in geeigneten Zeitabständen eine Desinfektion bzw. Reinigung vorzunehmen. Hierzu wird der normale Betrieb unterbrochen und dem flüssigkeitsführenden System ein chemisches Desinfektions- bzw. Reinigungsmittel zugeführt. Nach einer geeigneten Einwirkzeit folgt ein Spülvorgang, der dazu dient, das eingebrachte Desinfektionsmittel bzw. Reinigungsmittel und seine Reaktionsprodukte wieder zu entfernen, so dass anschließend der normale Versorgungsbetrieb wieder aufgenommen werden kann.

Wegen der erheblichen Gefahren, die mit einer unkontrollierten Zufuhr bzw. mit den Rückständen von Desinfektions- bzw. Reinigungsmitteln verbunden sind, insbesondere bei Anwendungen im medizinischen Bereich (Hämodialyse) ist diese Tätigkeit in der Regel mit einem Technikereinsatz verbunden und damit kostenintensiv.

Weitere Nachteile der bisherigen Lösungen sind der hohe Energieeinsatz bei einer thermischen Desinfektion sowie der Verlust an Permeatleistung wegen des nicht ablösbaren Biofilms.

Da der Verlust an Permeatleistung oder eine Kontamination mit Keimen oft auch nicht mehr durch aufwändige Reinigungs- u. Desinfektionsmaßnahmen zu kompensieren ist, erfolgt ein Austausch der Membranen.

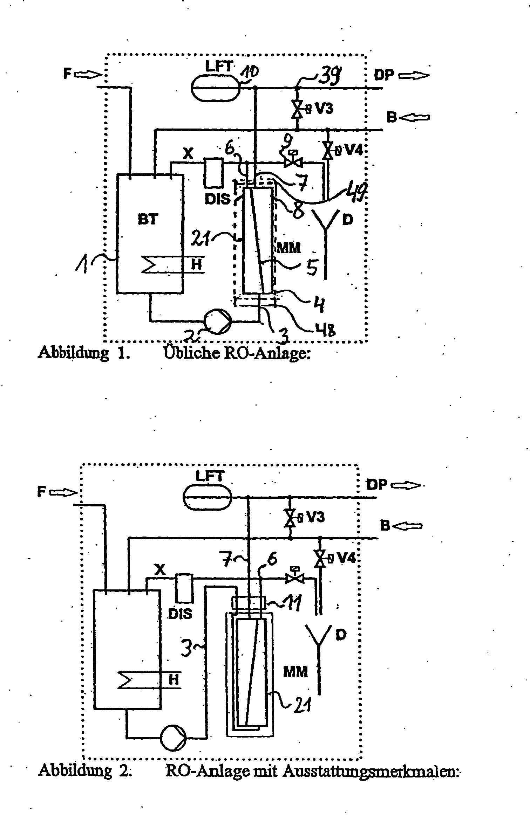

Dieser Membrantausch wird bei den heute vorhandenen Geräten durch einen Techniker in der Weise durchgeführt, dass zunächst die gesamte Umkehrosmoseanlage stillgesetzt und mittels Werkzeug das dreiteilige Filtermodul, bestehend aus Membranelement, Druckrohr und Anschlusseinheit, demontiert wird. Ein herkömmlicher Aufbau ist in Abbildung 1 dargestellt.

Danach wird das wasserbenetzte Membranelement aus dem Druckrohr gezogen und durch ein neues ersetzt. Je nach Größe der Anlage handelt es sich um mehrere Membranelemente.

Dabei können pro Membranelement mehrere Liter auch kontaminiertes Wasser austreten.

Die während der Reparatur entstehenden Stillstandszeiten der Umkehrosmoseanlage können dabei erheblich sein und insbesondere im Bereich der Organe unterstützenden Geräte (Hämodialyse) zum großen Nachteil für die Patienten werden.

Ein weiterer Nachteil ist die dem Austausch folgende chemische Desinfektion, die deshalb erforderlich ist, weil während der Reparatur auch die hochreinen Komponenten der Anschlussrohre bzw. Komponenten durch Techniker und Werkzeug kontaminiert wurden.

Von erheblichem Nachteil ist die historisch bedingte Dreiteiligkeit von Membran, Druckrohr und Anschlusseinheit des vorhandenen Filtermoduls, deren Ursache in den ursprünglich hohen Transmembrandrücken der Membranen begründet ist. Es wurden deshalb Filtermodule mit hoher Druckfestigkeit von Druckrohr und Anschlusseinheit konstruiert.

95% aller RO-Membranen sind heute quervernetzte aromatische Diamine (-Polyamid-).

Dieses aromatische Polyamid wird in extrem dünner Schicht (< 0,3 Mikrometer) auf eine Trägermembrane (oder Stützschicht) aufgetragen. Die Membrane wird deshalb auch Dünn-Film-Membrane genannt.

Die immer dünnere Membranschichtentwicklung hat bei gleicher Permeatleistung einen immer geringeren Transmembrandruck zur Folge. Die vorhandenen Druckrohrkonstruktionen nutzen diese Innovation aus wirtschaftlicher Sicht nur ungenügend.

Insbesondere im Bereich für medizinische und lebensmitteltechnische Anwendungen wird auf Totraumfreiheit des Filtermoduls geachtet. Dazu werden von der Industrie totraumfreie - sogenannte "full fit" Membranen angeboten. Diese Membranen sind teurer. Ein zusätzlicher Nachteil ist die erforderliche zusätzliche Pumpenleistung, die benötigt wird um den Rohrspalt zwischen dem Membranelement und dem Druckrohr zu überströmen.

Ein weiterer Nachteil dieser Technologie ist, dass die zu- und abführenden Anschlüsse an das Filtermodul zweiseitig an beiden Enden des Filtermoduls erfolgen.

Weitere Nachteile der bisherigen Lösung sind die dezentral zwischen Rohrleitungen angeordneten Komponenten zur Messung von Zustandsgrößen, Durchsätzen oder Stoffeigenschaften. Dies sind beispielsweise Leitfähigkeits- oder pH-Messzellen und Einrichtungen zur Beeinflussung der Flüssigkeitsströme, z.B. Ventile oder Drosseln.

Ebenso ist der enorme Verrohrungs- bzw. Verschlauchungsaufwand zu werten, der für die Aneinanderrreihung der Filtermodule zu einem Einfiltersystem benötigt wird.

Folgende Dokumente offenbaren Lösungen für aneinander reihbare Filtrationssysteme: Die US-A-5 401 399 offenbart ein modular aufgebautes Querstromfiltrationssystem mit prismenförmigen Einheiten, die mehrseitig Feed- und Permeatanschlüsse aufweisen. Das Retentat wird am gegenüberliegenden Ende des Druckrohrs abgeführt.

Die US-A-4 476 015 sowie die WO 91/04783 offenbaren modular aufgebaute Querstromsysteme mit allen Anschlüssen an einem Ende des Druckrohrs, jedoch ohne prismenförmige verbindbare Oberteile.

Die JP 63 163002, die DE 94 22 466 sowie die US-A-5 389 260 offenbaren modulare Filtersysteme mit prismenförmigen Oberteilen, weisen jedoch keine Retentatverbindungen auf, da es sich um Dead-End-Systeme handelt.

Aus den vorgenannten gründen ist es Aufgabe der Erfindung ein Membranmodul anzugeben, bei dem wenigstens einige der Nachteile des Standes der Technik hinsichtlich Hygiene-, Austauschbarkeit-, Herstellkosten vermieden sind.

Diese Aufgabe wird erfindungsgemäß durch die Merkmale des Anspruchs 1 gelöst. Vorteilhafte Ausgestaltungen der Erfindung sind in den Unteransprüchen angegeben.

Weitere Merkmale und Vorteile der Erfindung ergeben sich aus der nachfolgenden Beschreibung von Ausführungsbeispielen.

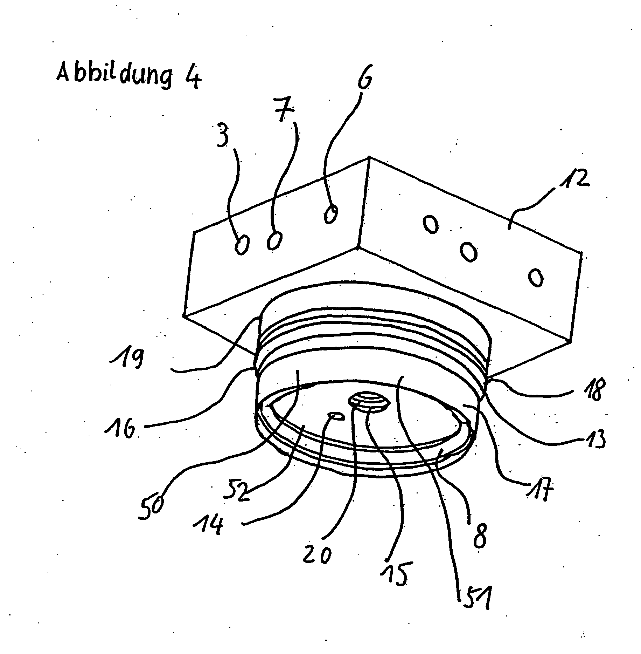

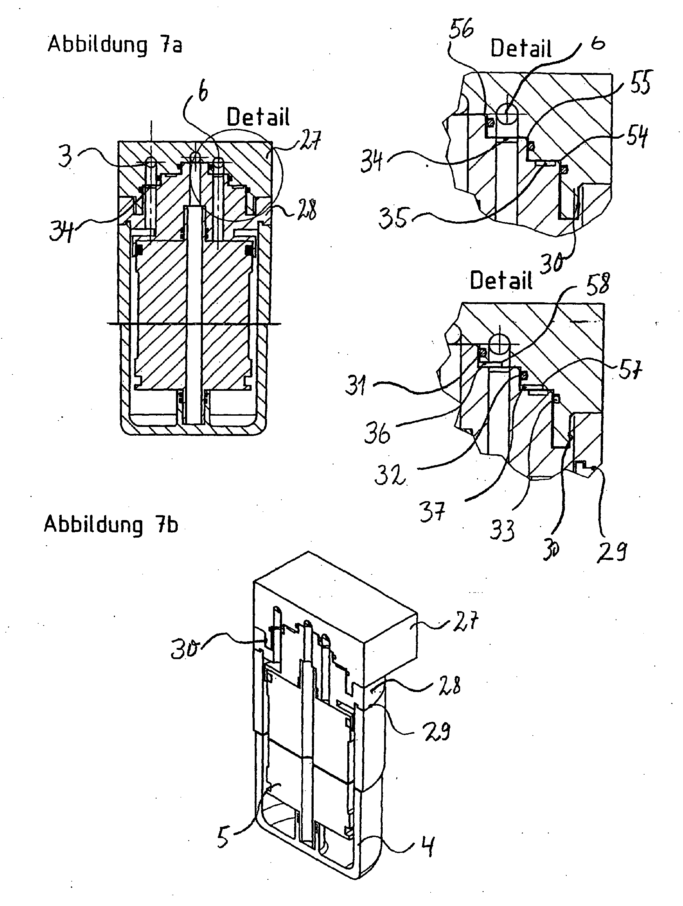

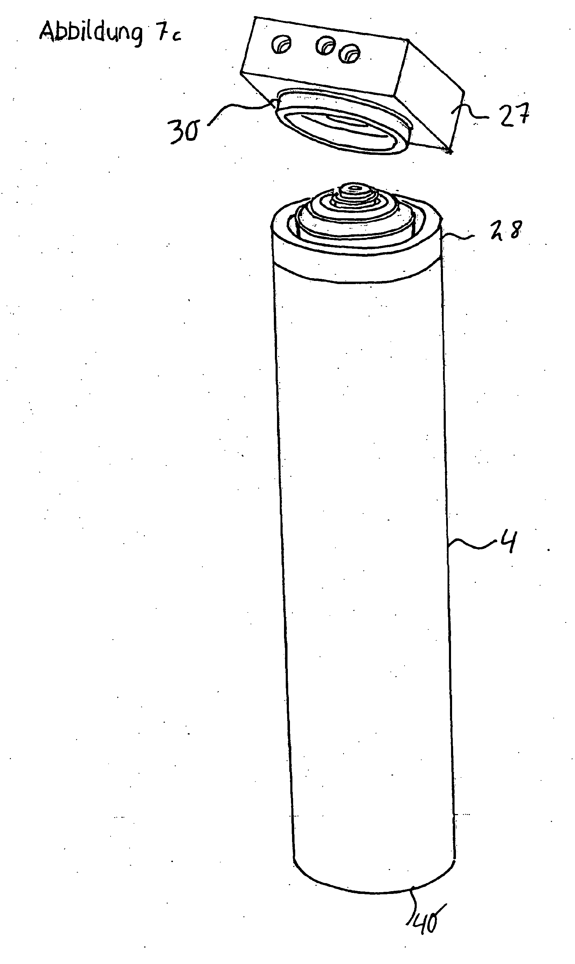

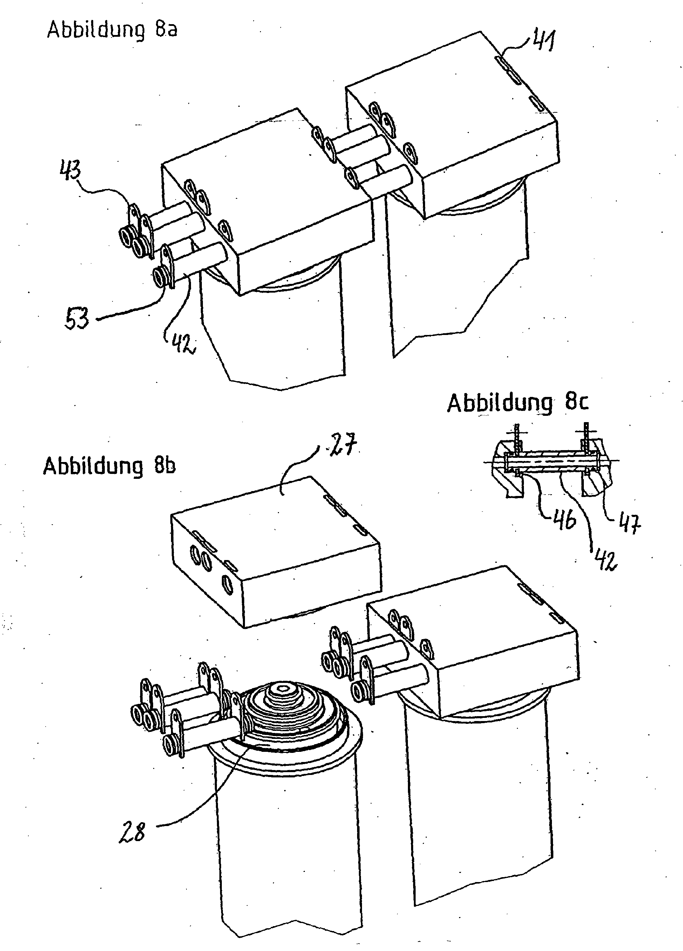

In den zugehörigen Abbildungen zeigt:
Abbildung 1
   Eine übliche RO- Anlage mit einem dreiteiligen Filtermodul nach dem Stand der Technik;
Abbildung 2
   Eine RO- Anlage gemäß der Erfindung;
Abbildung 3
   Schema eines erfindungsgemäßen Filtermoduls;
Abbildungen 3a und 3b
   Mehrere Filtermodule in Seriell- und Parallelschaltung;
Abbildung 4
   Eine Funktions-/Anschlusseinheit für ein Filtersystem in perspektivischer, schematisierter Darstellung;
Abbildung 5a/b
   Einen Vertikalschnitt und zugehörige perspektivische Darstellung der in Abbildung 4 gezeigten Funktions-/Anschlusseinheit mit Membran und aufgeschraubten Modulrohr;
Abbildung 6 a/b
   Einen Vertikalschnitt einer Funktions-/Anschlusseinheit mit Membran und Flanschmodulrohr;
Abbildung 7 a/b
   Ein Vertikalschnitt einer Funktions-/Anschlusseinheit für ein Filtersystem mit verschraubbaren Ober-/Unterteil und unlösbaren Modulrohr;
Abbildung 7c
   Ein Filtersystem der in Abbildung 7a/b gezeigten Funktions-/Anschlusseinheit in perspektivischer, schematisierter Darstellung;
Abbildung 8 a/b
   Eine schematische Darstellung der Abb. 7c zwischen benachbarten Funktions-/Anschlusseinheit mit den einzufügenden Dichtungselementen und der zugehörigen Verriegelung.

### Abb. 1

Die zugeführte Flüssigkeit fließt vom Vorlaufbehälter (1) über die Hochdruckpumpe (2) und den Anschluss der Flüssigkeitszuführung (3), die am Deckel des Druckrohres (48) befestigt ist, über das Druckrohr (4) in die Membran (5). Dabei wird der Ringspalt zwischen Membran und Druckrohrinnenseite (21) wegen der Dichtlippe der Membran (8) nicht durchströmt. Bei fehlenden Dichtlippen würde ein Teil der zugeführten Flüssigkeit wegen des dann entstehenden Bypass zur Membran zu einer ungenügenden Membranüberströmung führen. Die fehlende Überströmung wäre dann mit einer größeren Pumpenleistung zu kompensieren. Über den Filtratanschluss (7), der am Deckel (49) befestigt ist, fließt das Reinstwasser zum Ausgang DP. Bei einer fehlerhaften Permeatleitfähigkeit, festgestellt durch die Leitfähigkeitsmessung (10), wird das Freigabeventil (39) geöffnet und das Reinstwasser fließt zurück zum Vorlaufbehälter (1). Zur Steuerung der Ausbeute und der Reinstwasserqualität wird das Verwurfventil (9) periodisch geschaltet.

Das Modulrohr (4) erhält in diesem Fall zwei Deckel (48 / 49), in die zum einen der Anschluss Flüssigkeitszuführung (3) und zum anderen die Anschlüsse für Retentat und Filtrat (6 und 7) befestigt sind. Zur Demontage sind die Deckel (48 / 49) zu öffnen. Vorher sind die Anschlüsse (3 / 6 / 7) - die meist als hochdruckfeste Verbindung ausgebildet sind, zu lösen. Erst dann kann die Membran ausgebaut werden. Wegen der vielen Dichtstellen sind häufige Leckagen die Folge der Reparaturen.

### Abb. 2

Im Vergleich zu Abb. 1 zeigt diese Abbildung das Schema der erfindungsgemäßen Funktions- / Anschlusseinheit (11). Hier ist zu erkennen, dass alle 3 Anschlüsse (3 / 7 / 6) einseitig d.h. an einem Ende des Modulrohres zugeführt sind, und dass der Ringspalt zwischen Membran und Druckrohrinnenseite (21) durchspült wird.

### Abb. 3 a/b

Diese Abbildung verdeutlicht das Schema und zeigt insbesondere die Möglichkeit der modularen Seriell- und Parallelschaltung zur Vergrößerung der Filtratkapazität. Diese Vergrößerung kann durch Aneinanderreihen und Verbinden der Funktions- / Anschlusseinheit (11) erreicht werden. Hochdruckverbindungen sind dabei nicht notwendig, ebenso kann der Membrantausch ohne Diskonnektion der Leitungen durchgeführt werden. Dabei werden die nicht benötigten Anschlüsse mittels Verbindungsnippel 42, der hierbei als ungebohrter Nippel verwendet wird, verschlossen, bzw. nicht erstellt. Der Vorteil liegt in der einheitlichen Ausführung der Funktions-/Anschlusseinheiten 11. Die dargestellte Strömungsführung ist nur möglich, wenn die Anschlüsse 3 und 6 symmetrisch zu dem Anschluss 7 angeordnet sind und dabei horizontal ebenso auf einer Linie liegen, damit bei Seriellschaltung die nachfolgende Funktions-/ Anschlusseinheit um 180° gedreht werden kann. Sind die Anschlüsse 3 und 6 nicht symmetrisch zu dem Anschluss 7 und liegen sie nicht auf einer Linie erfolgt bei Aneinanderreihung jeweils eine Umkehr der Strömungsrichtung innerhalb des Filtermoduls. Für die Entgasung des Filtermoduls ist die gezeigte Strömungsrichtung vorteilhaft aber nicht zwingend, so dass je nach konstruktivem Vorteil die Funktions-/Anschlusseinheit 11 mit symmetrischen oder unsymmetrischen Anschlüssen 3,6,7 ausgeführt werden kann.

Die Funktions-/Anschlusseinheit kann an dem oberen oder an dem unteren Ende des Druckrohres angebracht sein.

### Abb. 4

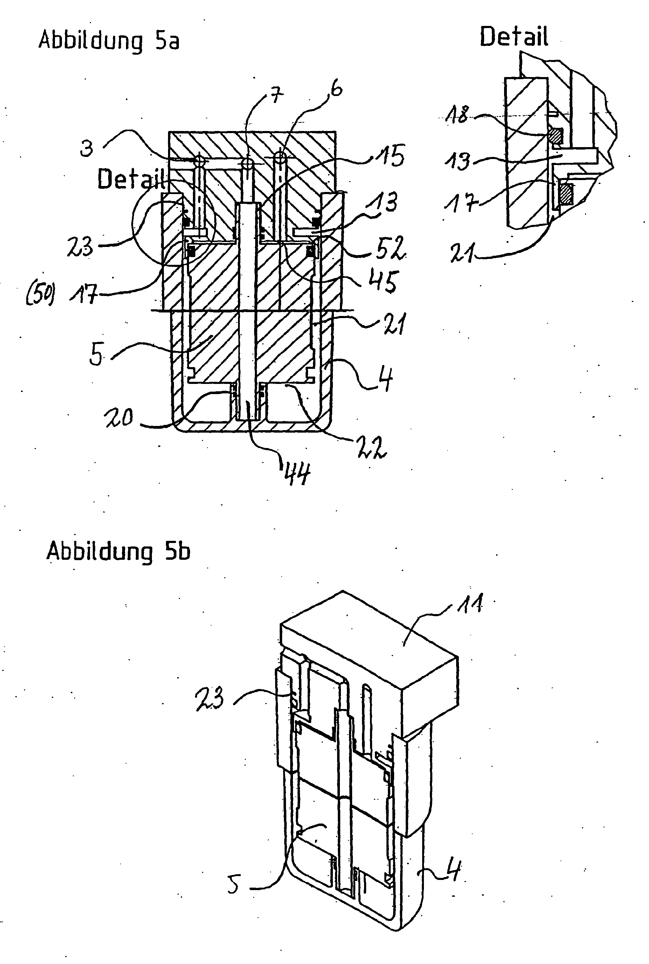

Diese Abbildung zeigt die detaillierte Funktions- / Anschlusseinheit (11). Diese Abbildung soll zum einem das Konzept der Aneinanderreihbarkeit mittels prismatischen Oberteil und der leichten Austauschbarkeit der Membranen mittels Schraubgewinde für das Modulrohr verdeutlichen. Nachfolgend weitere Details:
Hier ist mit (12) das prismatische Oberteil und mit (16) das zylindrische Unterteil dargestellt. In diesem Fall ist das zylindrische Unterteil mit dem Anschlussgewinde (19) zur Aufnahme des Druckrohres (4) versehen. In die Aufnahmebohrung des Permeatsammelrohres (15) wird das Permeatsammelrohr der Membran (5) eingesteckt und dabei das Oberteil der Membran mit Dichtung (8) abgedichtet, wobei diese Dichtung auch an der Membran angebracht sein kann. Die komplette Funktion wird in Abb. 5 beschrieben.

Die Flüssigkeitskanäle (50) und die Stege (51) dienen der gleichmäßigen Verteilung der Flüssigkeitszuführung in den Ringspalt zwischen Membran und Druckrohrinnenseite.

Der Membrananschlag (52) sorgt für einen ungehinderten Abfluss des Retentats in die Bohrung (14).

Das prismatische Oberteil kann zusätzlich Aufnahmeanschlüsse für mess- und regeltechnische Aufgaben beinhalten. Die Geometrie ist insbesondere für das Platz sparende Aneinanderreihen mehrerer Einheiten zweckmäßig.

Der Filtratanschluss 7 ist in der Regel immer mittig angeordnet. Die Anschlüsse 3,6 sind vorteilhaft symmetrisch zu 7 und liegen auf einer gemeinsamen horizontalen Ebene zueinander. Damit ist es möglich, die Funktions-/Anschlusseinheit 11 bei einem Filtersystem jeweils um 180° zu drehen und so aneinander zu reihen, dass es zu keiner Richtungsänderung des Flusses innerhalb der Filtermodule kommt. Es kann aber auch konstruktiv zweckmäßig sein, von dieser Symmetrie abzuweichen, um Flussänderungen innerhalb des Filtermoduls zu erreichen.

### Abb. 5

Diese Abbildung soll die Funktion hinsichtlich Totraumfreiheit und leichter Auswechselbarkeit der Membran verdeutlichen. Bevorzugt wird diese Konstruktion bei auswechselbaren Membranen mit Kunststoffdruckrohren.

Die Flüssigkeitszufuhr erfolgt an Anschluss (3). Die Flüssigkeit oder auch das Gas fließen über die Auslassbohrung mit umfließendem Ringspalt (13) außen an dem Aufnahmezylinder (17) der Membran in die Flüssigkeitskanäle (50) an der Außenseite des Zylinders gleichmäßig verteilt in den Ringspalt (21).

Die Flüssigkeitszufuhr in die Membran erfolgt über die Stirnseite (22). Dabei wird das Filtrat zum Permeatsammelrohr (44) filtriert und verlässt über den Filtratanschluss (7) die Funktions- / Anschlusseinheit (11). Der Retentataustritt erfolgt stirnseitig an (45). Das Retentat verlässt über den Retentatanschluss (6) die Funktions- / Anschlusseinheit.

Damit der Flüssigkeitsaustritt (45) an der gesamten Stirnfläche erfolgen kann, hat der Aufnahmezylinder der Membran (17) an seiner Innenseite einen Anschlag (52), auf den sich die Membran am umfangseitigen Rand abstützt.

Die besondere Ausgestaltung sieht ein aufgeschraubtes Druckrohr (4) vor, welches mittels Innengewinde (23) an der Funktions- / Anschlusseinheit befestigt wird.

Die Abdichtung des Modulrohres erfolgt mittels Dichtelement (18).

Als kraftschlüssige Verstärkung der Schraubverbindung kann eine Rohrhülse über die Außenseite des Modulrohres (nicht abgebildet) im Gewindebereich gepresst werden.

### Abb. 6

Diese Abbildung soll die Funktion hinsichtlich Totraumfreiheit und leichter Auswechselbarkeit der Membran bei Einsatz von metallischen Druckrohren verdeutlichen.

Bei sehr dünnwandigen z.B. metallischen Druckrohren ist eine Gewindebefestigung wie in Abb. 5 beschrieben nicht möglich. Deshalb erfolgt die Befestigung des Druckrohres an die Funktions- / Anschlusseinheit am Bördelrand des Druckrohres (25). Der Bördelrand des Modulrohres wird mittels einer geteilten Flanschklammer (24) aufgenommen und mit der Funktions- / Anschlusseinheit verklemmt.

Dabei liegt die Oberseite der Flanschklammer (24) in einer Haltenut (26) der Funktions- / Anschlusseinheit (11).

Die Flanschklammer (24) kann dabei aus 2 Halbkreisen oder mehreren Kreissegmenten bestehen. Sie kann jedoch auch aus einer Klammer mit einseitiger Verschraubung bestehen. Die auf der Funktions- / Anschlusseinheit in der Haltenut (26) liegende Seite hat dabei eine größere Auflagefläche als die Fläche am Bördelrand, da die Funktions- / Anschlusseinheit (11) in der Regel aus Kunststoff besteht und daher nicht die gleiche Festigkeit aufweist wie das metallische Druckrohr.

Zur Verbilligung der Flanschklammer besteht die Möglichkeit diese aus einem U-förmigen Blechmaterial kreisförmig zu biegen. In diesem Fall entfällt die Haltenut 26.

Bei hohen Drücken neigt der Flansch 25 zum Aufbiegen, deshalb kann der in einem Winkel zum Modulrohr nach außen gebördelte Flansch eine zusätzliche winklige Aufbördelung fluchtend zum Modulrohr erhalten. Diese von der Modulrohrwandung her gesehene Z-Form versteift den Flansch. In diesem Fall kann die Verbindung zwischen Modulrohr 4 und Funktions-Anschlusseinheit 11 mittels einer Flanschplatte mit Kreisausschnitt und Verbindungsschrauben hergestellt werden.

Flüssigkeitszuführung und Membranaufnahme wurden bereits in Abb. 5 beschrieben.

### Abb. 7

Diese Abbildung soll die Funktion bei Einsatz eines Einmaldruckrohres mit integrierter Membran als Billigvariante verdeutlichen.

In diesem Fall ist das prismatische Oberteil (27) vom zylindrischen Unterteil (28) mittels Schraubverbindung (30) voneinander lösbar. Dabei ist das Modulrohr (4) mit Schweißnaht (29) unlösbar am Unterteil (28) befestigt.

Die Flüssigkeitszufuhr erfolgt wie in Abb. 5 beschrieben. Da auf Grund der unterschiedlichen Gewindetoleranzen der Schraubverbindung (30) zwischen Ober- und Unterteil der Funktions- / Anschlusseinheit (11), bestehend aus (27) und (28), die Vertikalachsen der Flüssigkeitsbohrungen (3 und 6) nicht zueinander fluchten, wird mittels Freistich ein Sammelkanal für das Retentat (34) [ausgebildet als Kreisring-Vertiefung der 2. Stufe des Unterteils (55)] und mittels Freistich ein Sammelkanal der zuführenden Flüssigkeit (35) [ausgebildet als Kreisring-Vertiefung der 1. Stufe des Unterteils (54)] gebildet.

Zur Verbesserung des Retentatabflusses (6) und zur Erhöhung der Strömungsquerschnitte im Retentat-Abflusskanal (34) kann ein zusätzlicher Retentat- Abflusskanal (36) im Oberteil (27) hinzugefügt bzw. als alleiniger Abflusskanal genutzt werden.

Zur Verbesserung der Flüssigkeitsverteilung und zur Erhöhung der Strömungsquerschnitte der zuführenden Flüssigkeit kann zu dem Strömungskanal (35) ein zusätzlicher Strömungskanal (37) im Oberteil (27) hinzugefügt bzw. als alleiniger Strömungskanal genutzt werden.

Die Abdichtung zu den einzelnen Flüssigkeitskanälen erfolgt mit Dichtelementen (31 / 32 / 33). Abhängig von der Anzahl der Abfluss- bzw. Zuflusskanäle ist das Oberteil (27) dreistufig (54 / 55 / 56) oder fünfstufig (54 / 55 / 56 / 57 / 58) ausgebildet.

### Abb. 7c

Veranschaulicht in perspektivischer Weise die schematischen Darstellungen von 7.

### Abb. 8

Diese Abbildung zeigt die einfache Möglichkeit des Ausbaues zu einem Filtersystem paralleler Ausführung mit standardisierten Komponenten und geringen Fertigungsaufwand.

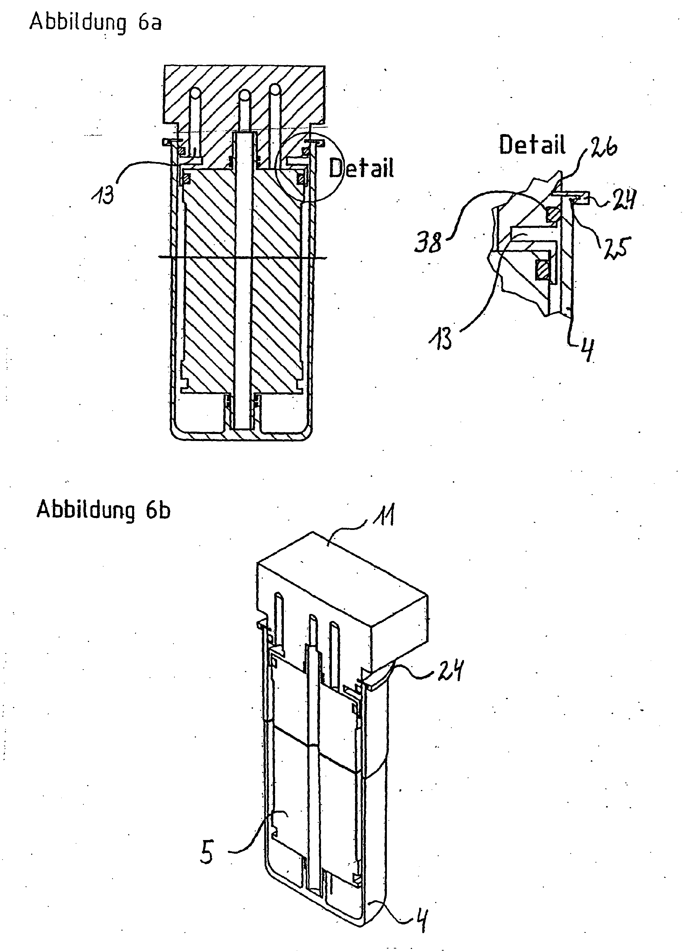

Ausgehend von Abb. 7 - aber ebenso anwendbar auf Abb. 5 und 6 - zeigt diese Darstellung in perspektivischer Weise das parallelfluchtende Zusammenschalten der Funktions- / Anschlusseinheiten (11), in diesem Fall des prismatischen Oberteils (27). Dabei werden die benachbarten Funktions- / Anschlusseinheiten mittels Verbindungsstecknippel (42) zusammengesteckt. Die Verbindungsstecknippel (42) erhalten umfangsseitig Dichtelemente (53), die einfach oder mehrfach hintereinander in die Nut (47) eingelegt werden. In die Nut (46) werden die Verriegelungen (43) über die Öffnungen zur Aufnahme der Verriegelung (41) der Funktions- / Anschlusseinheiten eingesteckt. Dabei können die Aufnahmebohrungen (3 / 7 / 6) gleichzeitig an allen Seiten des prismatischen Oberteils angebracht werden, um ein Parallel- oder Seriellschalten zu ermöglichen damit eine Erhöhung der Filtratkapazität erreicht wird.

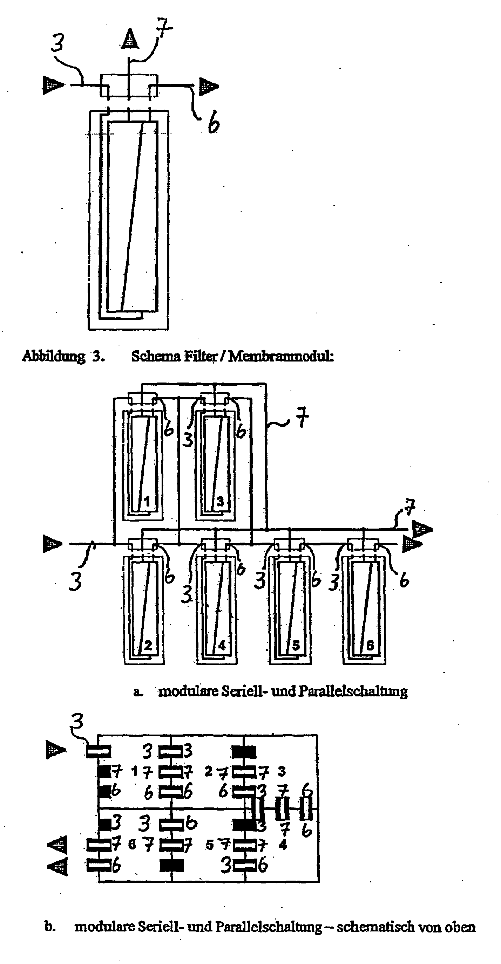

Bei paralleler Ausführung werden die Strömungskanäle 3,6,7 mittels Stecknippel 42 wie dargestellt miteinander verbunden. Bedingt durch unterschiedliche Anforderung an die Permeatqualität, den Wirkungsgrad des Gesamtsystems oder auch der Qualität der zufließenden Flüssigkeit ist auch eine Seriellschaltung- bzw. die Kombination aus Parallel- und Seriellschaltung der Filterelemente in Betracht zu ziehen, wie aus Figur 3 zu ersehen ist..

Dabei erhalten die Funktions-/Anschlusseinheiten an einer oder mehreren - für die Zusammenschaltung konstruktiv günstigen Seite die Anschlüsse 3,6,7.

Es wird betont, dass die Erfindung nicht auf die beschriebenen und dargestellten Ausführungsformen beschränkt ist. Vielmehr sind alle offenbarten Merkmale auf jede Weise einzeln miteinander kombinierbar.

| | |
|---|---|
| 1. | Vorlaufbehälter |
| 2. | Hochdruckpumpe |
| 3. | Anschluss Flüssigkeüszuführung |
| 4. | Druckrohr |
| 5. | Membrane |
| 6. | Anschluss abfließendes Retentat |
| 7. | Anschluss Filtrat |
| 8. | Dichtlippen der Membrane |
| 9. | Verwurfventil Retentat |
| 10. | Leitfähigkeitsmessung Filtrat |
| 11. | Funktions-/Anschlusseinheit |
| 12. | Prismatisches Oberteil der Funktions-/Anschlusseinheit |
| 13. | Auslassbohrung mit umlaufendem Ringspalt der zulaufenden Flüssigkeit |
| 14. | Stirnseitige Bohrung des abfließenden Retentates |
| 15. | Aufnahmebohrung des Permeatsammelrohres (Filtratabfluss) |
| 16. | Zylindrisches Unterteil der Funktions-/Anschlusseinheit |
| 17. | Aufnahmezylinder der Membran mit Flüssigkeitskanälen an der Außenseite zur gleichmäßigen Verteilung zur Flüssigkeitszuführung in den Ringspalt zwischen Membran und Druckrohrinnenseite und Membrananschlag an der Innenseite |
| 18. | Abdichtung des geschraubten Modulrohres |
| 19. | Außengewinde zur Aufnahme des geschraubten Modulrohres |
| 20. | Dichtung des Permeatsammelrohres |
| 21. | Ringspalt zwischen Membrane und Druckrohrinnenseite |
| 22. | Flüssigkeitszuführung in die Membrane |
| 23. | Innengewinde des Modulrohres zur Befestigung an die Funktions-/Anschlusseinheit |
| 24. | Geteilte Flanschklammer zur Befestigung des Flanschmodulrohres an die Funktions-/Anschlusseinheit. Die einzelnen Teilstücke der Flanschklammer sind zu verbinden. |
| 25. | Modulrohrflansch |
| 26. | Haltenut der Flanschklammer in der Funktions-/Anschlusseinheit |
| 27. | Separates prismatisches Oberteil der zweigeteilten Funktions-/Anschlusseinheit |
| 28. | Separates zylindrisches Unterteil der zweigeteilten Funktions-/Anschlusseinheit |
| 29. | Schweißnaht des unlösbaren Modulrohres |
| 30. | Schraubverbindung zwischen Ober- u. Unterteil der Funktions-/Anschlusseinheit |
| 31. | Ringförmige Abdichtung Filtratausgang |
| 32. | Ringförmige Abdichtung Retentatausgang |
| 33. | Ringförmige Abdichtung Flüssigkeitszuführung |
| 34. | Sammelkanal des Retentates ausgebildet als Kreisring-Vertiefung der 2. Stufe des Unterteils |
| 35. | Sammelkanal der zuführenden Flüssigkeit ausgebildet als Kreisring-Vertiefung der 1. Stufe des Unterteils |
| 36. | Sammelkanal des Retentates ausgebildet als 3. Stufe im Oberteil |
| 37. | Sammelkanal der zuführenden Flüssigkeit ausgebildet als 1. Stufe im Oberteil |
| 38. | Abdichtring des Flanschmodulrohres |
| 39. | Freigabeventil Filtrat |
| 40. | Modulrohrunterteil |
| 41. | Öffnung zur Aufnahme der Verriegelungen |
| 42. | Verbindungsstecknippel mit Dichtungselementen |
| 43. | Verriegelungen |
| 44. | Permeatsammelrohr |
| 45. | Retentataustritt aus der Membran |
| 46. | Stecknippel Haltenut für Verriegelung |
| 47. | Stecknippel Nut für Dichtelement |
| 48. | Deckel für Modulrohr |
| 49. | Deckel für Modulrohr |
| 50. | Flüssigkeitskanäle |
| 51. | Stege |
| 52. | Membrananschlag |
| 53. | Dichtelement für Stecknippel |
| 54. | Stufe 1 |
| 55. | Stufe 2 |
| 56. | Stufe 3 |
| 57. | Stufe 4 |
| 58. | Stufe 5 |

## Patentansprüche

1. Filtermodul mit einem Druckrohr und einer darin angeordneten Membran, mit Anschlüssen für ein zuzuführendes Fluid, vorzugsweise Rohwasser, und für abfließendes Filtrat und Retentat, mit einer Funktions-/Anschlusseinheit (11), die an einem Ende des Druckrohres (4) befestigt ist und ein Oberteil (12) und ein Unterteil aufweist,
wobei alle Anschlüsse (3,6,7) an dem Oberteil (12) vorgesehen sind und mit den Anschlüssen (3,6,7) in Verbindung stehende Strömungskanäle durch das Unterteil hindurch führen,
wobei zwischen dem Druckrohr (4) und der Membran (5) ein offener Ringraum (21) vorgesehen ist, durch den das zugeführte Fluid zur Unterseite der Membran (5) strömt, und
wobei das Druckrohr (4) einen geschlossenen Boden aufweist,
**dadurch gekennzeichnet,**
**dass** das Oberteil (12) eine Prisma-Form hat und
**dass** in mehreren Seitenflächen des Prismas jeweils alle drei Anschlüsse (3,6,7) vorgesehen sind, so dass zwei oder mehr Funktions-/Anschlusseinheiten (11) zu einem Filtersystem miteinander verbindbar sind, wobei deren Seitenflächen parallel zueinander liegen, wobei nicht benötigte Anschlüsse mittels ungebohrter Nippel verschließbar sind.

2. Filtermodul nach Anspruch 1,
**dadurch gekennzeichnet,**
**dass** die Funktions-/Anschlusseinheit (11) an dem oberen Ende des Druckrohres (4) befestigt ist.

3. Filtermodul nach Anspruch 1,
**dadurch gekennzeichnet,**
**dass** die Funktions-/Anschlusseinheit (11) an dem unteren Ende des Druckrohres (4) befestigt ist.

4. Filtermodul nach einem der Ansprüche 1 bis 3,
**dadurch gekennzeichnet,**
**dass** benachbarte Funktions-/Anschlusseinheiten (11) durch Stecknippel (42) verbindbar sind.

5. Filtermodul nach Anspruch 4,
**dadurch gekennzeichnet,**
**dass** die Stecknippel (42) verriegelbar sind.

6. Filtermodul nach einem der Ansprüche 1 bis 5,
**dadurch gekennzeichnet,**
**dass** das Unterteil eine Zylinder-Form hat und einen Verbindungsanschluss für das Druckrohr (4) und einen Anschluss (52) für die Membran (5) aufweist, derart, dass das zugeführte Fluid zwischen der Membran (5) und der Innenwand des Druckrohres (4) eingeleitet wird.

7. Filtermodul nach einem der Ansprüche 1 bis 6,
**dadurch gekennzeichnet,**
**dass** die Funktions-/Anschlusseinheit (11) ferner zu- und abführende Anschlüsse aufweist, die der Verbindung des Systems mit externen Einrichtungen, der Probenentnahme oder der Injektion von Medien dienen, die an den Seitenflächen oder der Stirnfläche des Oberteiles (12) angeordnet sind.

8. Filtermodul nach einem der Ansprüche 1 bis 7,
**dadurch gekennzeichnet,**
**dass** die Funktions-/Anschlusseinheit (11) zusätzliche Aufnahmeanschlüsse für mess- und regelungstechnische Einrichtungen wie Sensoren zur Messung von Zustandsgrößen, Durchsätzen und Stoffeigenschaften und/oder Einrichtungen zur Beeinflussung der Gas-/Flüssigkeitsströme im Sinne einer Freigabe, Beschleunigung, Sperrung, Drosselung oder Umschaltung aufweist.

9. Filtermodul nach einem der Ansprüche 1 bis 8,
**dadurch gekennzeichnet,**
**dass** das Druckrohr (4) einen Flansch (25) aufweist und mittels Klemmen (24) am Unterteil der Funktions-/Anschlusseinheit (11) befestigt ist.

10. Filtermodul nach einem der Ansprüche 1 bis 8,
**dadurch gekennzeichnet,**
**dass** das Druckrohr (4) ein Gewinde (23) aufweist und mittels Schraubverbindung am Unterteil der Funktions-/Anschlusseinheit (11) befestigt ist.

11. Filtermodul nach einem der Ansprüche 1 bis 10,
**dadurch gekennzeichnet,**
**dass** Ober- (27) und Unterteil (28) der Funktions-/Anschlusseinheit (11) mittels Schraubverbindung lösbar aneinander befestigt sind.

12. Filtermodul nach Anspruch 11,
**dadurch gekennzeichnet,**
**dass** das Druckrohr (4) und die Membran (5) unlösbar mit dem einzuschraubenden Unterteil (28) verbunden sind.

13. Filtermodul nach Anspruch 11,
**dadurch gekennzeichnet,**
**dass** das Oberteil der Funktions-/Anschlusseinheit (11) eine zentrische dreistufige Bohrung zur Aufnahme des einzuschraubenden Unterteiles hat.

14. Filtermodul nach einem der Ansprüche 1 bis 13,
**dadurch gekennzeichnet,**
**dass** der der Funktions-/Anschlusseinheit (11) gegenüberliegende Boden des Druckrohres (4) zu öffnen ist.

## Claims

1. A filter module with a pressure pipe and membrane disposed therein, connections for a liquid to be supplied, preferably raw water, and for discharging filtrate and retentate, a functional/connection unit (11), which is connected to one end of the pressure pipe (4), and has an upper portion (12) and a lower portion, wherein all the connections (3, 6, 7) are provided on the upper portion (12) and flow passages communicating with the connections (3, 6, 7) pass through the lower portion, wherein provided between the pressure pipe (4) and the membrane (5) there is an open annular space (21), through which the supplied fluid flows to the underside of the membrane (5), and wherein the pressure pipe (4) has a closed base, **characterised in that** the upper portion (12) has the shape of a prism and that all three connections (3, 6, 7) are provided in each of a plurality of side surfaces of the prism so that two or more functional/connection units (11) are connectable together to form a filter system, wherein its side surfaces extend parallel to one another, wherein connections that are not required are closable by means of unbored plugs.

2. A filter module as claimed in claim 1, **characterised in that** the functional/connection unit (11) is connected to the upper end of the pressure pipe (4).

3. A filter module as claimed in claim 1, **characterised in that** the functional/connection unit (11) is connected to the lower end of the pressure pipe (4).

4. A filter module a claimed in one of claims 1 to 3, **characterised in that** adjacent functional/connection units (11) are connectable by means of plug connectors (42).

5. A filter module as claimed in claim 4, **characterised in that** the plug connectors (42) are lockable.

6. A filter module as claimed in one of claims 1 to 5, **characterised in that** the lower portion has a cylindrical shape and a connector for the pressure pipe (4) and a connector (52) for the membrane (5) such that the supplied fluid is introduced between the membrane (5) and the inner wall of the pressure pipe (4).

7. A filter module as claimed in one of claims 1 to 6, **characterised in that** the functional/connection unit (11) further has supply and drain connections, which serve to connect the system to external devices, for sample removal or the injection of media, which are disposed on the side surfaces or the end surface of the upper portion (12).

8. A filter module as claimed in one of claims 1 to 7, **characterised in that** the functional/connection unit (11) has additional receiving connections for measuring and control devices, such as sensors for measuring condition parameters, throughputs and material properties and/or devices for influencing the gas/liquid flows in the sense of releasing, accelerating, blocking, throttling or switching.

9. A filter module as claimed in one of claims 1 to 8, **characterised in that** the pressure pipe (4) has a flange (25) and is connected by means of clips (24) to the lower portion of the functional/connection unit (11).

10. A filter module as claimed in one of claims 1 to 8, **characterised in that** the pressure pipe (4) has a screw thread (23) and is connected by means of a screw connection to the lower portion of the functional/connection unit (11).

11. A filter module as claimed in one of claims 1 to 10, **characterised in that** the upper portion (27) and lower portion (28) of the functional/connection unit (11) are releasably connected together by means of a screw connection.

12. A filter module as claimed in claim 11, **characterised in that** the pressure pipe (4) and the membrane (5) are unreleasably connected to the lower portion (28) to be screwed in.

13. A filter module as claimed in claim 11, **characterised in that** the upper portion of the functional/connection unit 11, has a central three-stepped bore for receiving the lower portion to be screwed in.

14. A filter module as claimed in one of claims 1 to 13, **characterised in that** the base, which is opposite to the functional/connection unit (11), of the pressure pipe (4) is openable.

## Revendications

1. Module de filtre avec un tube de pression et une membrane qui y est agencée, avec des raccords pour un fluide à amener, de préférence de l'eau brute, et pour filtrat et retentat à évacuer, avec une unité de fonctionnement/raccordement (11) qui est fixée à une extrémité du tube de pression (4) et présente une partie supérieure (12) et une partie inférieure,
dans lequel tous les raccords (3, 6, 7) sont prévus au niveau de la partie supérieure (12) et des canaux d'écoulement communiquant avec les raccords (3, 6, 7) traversent la partie inférieure,
dans lequel un espace annulaire (21) ouvert est prévu entre le tube de pression (4) et la membrane (5), par lequel le fluide amené s'écoule vers la face inférieure de la membrane (5), et
dans lequel le tube de pression (4) présente un fond fermé,
**caractérisé**
**en ce que** la partie supérieure (12) a une forme de prisme et
**en ce que** respectivement tous les trois raccords (3, 6, 7) sont prévus dans plusieurs faces latérales du prisme de telle sorte que deux ou plusieurs unités de fonctionnement/raccordement (11) peuvent être reliées les unes aux autres en un système de filtre, dans lequel leurs faces latérales sont parallèles l'une à l'autre, dans lequel les raccords non nécessaires peuvent être obturés à l'aide d'un raccord fileté non percé.

2. Module de filtre selon la revendication 1,
**caractérisé en ce que**
l'unité de fonctionnement/raccordement (11) est fixée à l'extrémité supérieure du tube de pression (4).

3. Module de filtre selon la revendication 1,
**caractérisé en ce que**
l'unité de fonctionnement/raccordement (11) est fixée à l'extrémité inférieure du tube de pression (4).

4. Module de filtre selon l'une quelconque des revendications 1 à 3,
**caractérisé en ce que**
des unités de fonctionnement/raccordement (11) adjacentes peuvent être reliées par des raccords filetés enfichables (42).

5. Module de filtre selon la revendication 4,
**caractérisé en ce que**
les raccords filetés enfichables (42) sont verrouillables.

6. Module de filtre selon l'une quelconque des revendications 1 à 5,
**caractérisé en ce que**
la partie inférieure a une forme de cylindre et présente un raccord de connexion pour le tube de pression (4) et un raccord (52) pour la membrane (5) de telle sorte que le fluide amené est introduit entre la membrane (5) et la paroi intérieure du tube de pression (4).

7. Module de filtre selon l'une quelconque des revendications 1 à 6,
**caractérisé en ce que**
l'unité de fonctionnement/raccordement (11) présente en outre des raccords d'amenée et d'évacuation, qui servent au raccordement du système à des dispositifs externes, au prélèvement d'échantillons ou à l'injection d'agents, qui sont disposés sur les faces latérales ou la face avant de la partie supérieure (12).

8. Module de filtre selon l'une quelconque des revendications 1 à 7,
**caractérisé en ce que**
l'unité de fonctionnement/raccordement (11) présente des raccords de réception supplémentaires pour des dispositifs techniques de mesure et de régulation tels des capteurs de mesure de paramètres d'état, débits et propriétés de substances et/ou des dispositifs influençant les flux de gaz/liquide au sens de libération, accélération, blocage, étranglement ou commutation.

9. Module de filtre selon l'une quelconque des revendications 1 à 8,
**caractérisé en ce que**
le tube de pression (4) présente un collet (25) et est fixé à la partie inférieure de l'unité de fonctionnement/raccordement (11) à l'aide d'agrafes (24).

10. Module de filtre selon l'une quelconque des revendications 1 à 8,
**caractérisé en ce que**
le tube de pression (4) présente un filetage (23) et est fixé à la partie inférieure de l'unité de fonctionnement/raccordement (11) par vissage.

11. Module de filtre selon l'une quelconque des revendications 1 à 10,
**caractérisé en ce que**
la partie supérieure (27) et inférieure (28) de l'unité de fonctionnement/raccordement (11) sont fixées l'une à l'autre de manière amovible par vissage.

12. Module de filtre selon la revendication 11,
**caractérisé en ce que**
le tube de pression (4) et la membrane (5) sont reliés de manière inamovible à la partie inférieure (28) à visser.

13. Module de filtre selon la revendication 11,
**caractérisé en ce que**
la partie supérieure de l'unité de fonctionnement/raccordement (11) a un perçage central à trois niveaux permettant de recevoir la partie inférieure à visser.

14. Module de filtre selon l'une quelconque des revendications 1 à 13,
**caractérisé en ce que**
le fond, opposé à l'unité de fonctionnement/ raccordement (11), du tube de pression (4) doit être ouvert.
